# EUROPÄISCHE PATENTSCHRIFT

(11) **EP 3 727 945 B1**
(45) Veröffentlichungstag und Bekanntmachung des Hinweises auf die Patenterteilung: **09.06.2021**
(21) Anmeldenummer: 19718078.9
(22) Anmeldetag: 04.04.2019
(51) Int. Cl.: B60R 16/037, B60W 50/08, B60W 40/08, B60W 50/00

(54) **VERFAHREN ZUM FAHRSITUATIONSABHÄNGIGEN BETREIBEN EINES KRAFTFAHRZEUGSYSTEMS EINES KRAFTFAHRZEUGS, PERSONALISIERUNGSEINRICHTUNG UND KRAFTFAHRZEUG**
METHOD FOR OPERATING A MOTOR VEHICLE SYSTEM OF A MOTOR VEHICLE REGARDLESS OF THE DRIVING SITUATION, PERSONALIZATION DEVICE, AND MOTOR VEHICLE
PROCÉDÉ DE FONCTIONNEMENT, DÉPENDANT D'UNE SITUATION DE ROULEMENT, D'UN SYSTÈME D'UN VÉHICULE AUTOMOBILE, DISPOSITIF DE PERSONNALISATION ET VÉHICULE AUTOMOBILE

(30) Priorität: 02.05.2018 DE 102018206717
(43) Veröffentlichungstag der Anmeldung: 28.10.2020
(73) Patentinhaber: AUDI AG, 85045 Ingolstadt (DE)
(72) Erfinder: LERZER, Jürgen, 92318 Neumarkt (DE); SOFRA, Nikoletta, 85049 Ingolstadt (DE); GRUBER, Hans Georg, 85049 Ingolstadt (DE); EBNER, André, 85051 Ingolstadt (DE); MELZ, Ron, 85051 Ingolstadt (DE)
(86) Internationale Anmeldenummer: PCT/EP2019/058463
(87) Internationale Veröffentlichungsnummer: WO 2019/211055

(56) Entgegenhaltungen:
- EP-A1- 3 217 333
- DE-A1-102013 201 959
- US-A1- 2013 030 645
- US-B1- 9 545 931

## Beschreibung

Die Erfindung betrifft ein Verfahren zum fahrsituationsabhängigen Betreiben eines Kraftfahrzeugsystems eines Kraftfahrzeugs, das durch eine Personalisierungseinrichtung des Kraftfahrzeugs durchgeführt wird. Die Erfindung betrifft ebenfalls die Personalisierungseinrichtung, die zum Beispiel als Steuergerät des Kraftfahrzeugs oder als System mehrerer Geräte oder mehrerer Gerätekomponenten ausgestaltet sein kann. Die Erfindung betrifft ebenfalls ein Kraftfahrzeug mit einer erfindungsgemäßen Personalisierungseinrichtung, wobei das Kraftfahrzeug vorzugsweise als Kraftwagen ausgestaltet sein kann.

In gegenwärtigen und zukünftigen Kraftfahrzeugen können diese einen kontinuierlich anwachsenden Grad an Personalisierung unterstützen. Die Personalisierung erfolgt durch Identifizierung oder Authentifizierung des Fahrers des Kraftfahrzeugs, und Auswahl eines Benutzerprofils in Abhängigkeit von einer Identität des Fahrers.

Das Benutzerprofil kann dabei zum Beispiel in einem internen Speicher des Kraftfahrzeugs und/oder in einer Rechnerwolke oder Datenwolke ("Daten-Cloud"), also in einem Rechnernetz, abgelegt sein. Ist es in der Daten-Cloud abgelegt, muss es auf das Kraftfahrzeug heruntergeladen werden. Ist es im Kraftfahrzeug abgelegt und in der Daten-Cloud, können entsprechende Synchronisationsmechanismen angewendet werden.

Eine Identität des Fahrers kann beispielsweise durch verschiedene Mittel erfasst und festgestellt werden oder eine Kombination dieser Mittel. Beispielhafte Mittel sind ein Schlüssel, der einem Benutzer zugeordnet ist, ein Anmelden oder Einloggen mit einem Passwort und/oder einer persönlichen Identifikationsnummer ("Pin"), oder durch biometrische Identifikation oder Authentifizierung des Benutzers, beispielsweise durch Erfassen eines Fingerabdruckes, einer Gesichtserkennung oder einer Iriserkennung.

Diese Daten können zum Beispiel Benutzerrechte eines oder mehrerer Benutzer sowie deren persönliche Einstellungen beschreiben. Die personalisierten Parameter oder Daten können beispielsweise umfassen: Benutzerspezifische Kraftfahrzeug-Einstellungen; benutzerspezifische Listen, zum Beispiel eine Liste der letzten Navigationsziele, Listen der letzten Anrufe oder Favoritenlisten, zum Beispiel eine Favoritenliste von Radiostationen; benutzerspezifische Bildschirme oder Hintergrundbilder eines Bildschirms, beispielsweise eine Einstellung eines Startbildschirms oder Willkommens-Bildschirms; benutzerspezifische ausgewählte Inhalte; gelerntes Verhalten des Benutzers; ein oder mehrere benutzerspezifische Kraftfahrzeug-Funktions-Profile, die zum Beispiel beschreiben können, welche Kraftfahrzeugfunktionen durch den Benutzer aktiviert, gekauft oder zum Beispiel heruntergeladen wurden; und ein Erfahrungsgrad für Kraftfahrzeugfunktionen.

Die WO 2005/068259 A1 beschreibt ein Verfahren zum Übertragen von persönlichen Einstellungen von einem ersten Kraftfahrzeug auf ein zweites Kraftfahrzeug, insbesondere für einen Fahrer, der das Fahrzeug wechselt.

Die DE 10 2015 225 838 A1 beschreibt ein Verfahren zum Personalisieren zumindest einer Einstellung einer Einrichtung des Fahrzeugs.

Die DE 10 2013 201 959 A1 beschreibt eine automatische Anpassung einer Konfiguration eines Kraftfahrzeugs an Präferenzen der Fahrzeuginsassen. Dabei kann eine Vielzahl von gleichzeitigen Benutzern berücksichtigt werden. Eine gemeinsame Präferenz der Vielzahl von Benutzern kann zum Beispiel auf Basis von Konfigurationsprofilen der Vielzahl von Benutzern und/oder auf Basis eines Gruppen-Konfigurationsprofils für die Vielzahl von Benutzern ermittelt werden. Mit anderen Worten wird für eine Vielzahl unterschiedlicher Benutzer jeweils ein Benutzerprofil bereitgestellt.

Die EP 3 217 333 A1 beschreibt ein Information-bereitstellendes Gerät umfassend eine beauftragte ECU (electronic circuit unit), die eine Belohnungs-Funktion durch die Verwendung von historischen Daten bereitstellt, zu einem Vorschlag einer Operation für eine Kraftfahrzeug-Komponente, und die eine Wahrscheinlichkeitsverteilung berechnet.

Die US 2013/0030645 A1 beschreibt ein Infotainmentsystem zum Liefern von Inhalten an mehrere Insassen eines Kraftfahrzeugs.

Die US 9,545,931 B1 beschreibt einen Ansatz zum Einstellen einer Tempomatgeschwindigkeit basierend auf dem Identifizieren eines Kraftfahrzeugbetreibers und dem Analysieren von Metadaten, die mit dem Kraftfahrzeugbetreiber assoziiert sind.

Die DE 10 2016 118 888 A1 beschreibt ein Verfahren zum Bereitstellen mindestens einer individualisierten Nutzerfunktion in einem Fahrzeug und ein Steuerungssystem für ein Fahrzeug.

Durch den zuletzt genannten Stand der Technik wird jedoch nicht berücksichtigt, welche Person die Funktion des Fahrers übernimmt. Möchte der Fahrer auf sich selbst zugeschnittene Präferenzen haben, muss er Einstellungen manuell ändern. Dies ist jedoch nicht wünschenswert, da der Fahrer so wenig wie möglich mit der Bedienung beispielsweise eines Infotainmentsystems beschäftigt sein soll, damit er möglichst viel Aufmerksamkeit dem Verkehrsgeschehen widmen kann.

Eine der Erfindung zugrundeliegende Aufgabe ist das Erhöhen einer Fahrsicherheit während einer Fahrt.

Die gestellte Aufgabe wird durch das erfindungsgemäße Verfahren und die erfindungsgemäße Vorrichtung gemäß der nebengeordneten Patentansprüche gelöst. Vorteilhafte Weiterbildungen sind durch die Unteransprüche gegeben.

Die Erfindung liegt die Erkenntnis zugrunde, das eine Präferenz des Fahrers bezüglich Benutzereinstellungen davon abhängen kann, welche Intention der Fahrer für eine Fahrt hat. Die Erfindung basiert auf der Idee, ein Personalisierungs-Konzept bereitzustellen, das berücksichtigt, dass ein Verhalten des Fahrers unterschiedlich sein kann, und wobei die durch das Benutzerprofil bereitgestellten Konfigurationsdaten berücksichtigen, ob weitere Insassen in dem Kraftfahrzeug vorhanden sind oder nicht, und, falls ja, wer die anderen Passagiere sind. Mit anderen Worten basiert die Erfindung auf dem Konzept, eines von mehreren Benutzerprofilen des Fahrers, also eines von mehreren Sub-Benutzerprofilen des Fahrers, in Abhängigkeit von einer Belegung des Kraftfahrzeugs mit weiteren Insassen bereitzustellen.

Das erfindungsgemäße Verfahren zum fahrsituationsabhängigen Betreiben mindestens eines Kraftfahrzeugsystems eines Kraftfahrzeugs weist die folgenden, durch eine Personalisierungseinrichtung des Kraftfahrzeugs durchgeführten Schritte auf. Als Personalisierungseinrichtung wird dabei ein Gerät oder eine Gerätekomponente oder ein System mehrerer Geräte oder mehrerer Gerätekomponenten verstanden, das zum Identifizieren einer Person eingerichtet ist, sowie zum Verwalten mehrerer Konfigurationsdatensätze, und zum Erzeugen von Steuersignalen. Die Personalisierungseinrichtung kann vorzugsweise als Steuergerät, Verbund von Steuergeräten oder als Steuerchip ausgestaltet sein.

In einem ersten Schritt erfolgt ein Identifizieren eines Fahrers des Kraftfahrzeugs, beispielsweise anhand eines empfangenen Sensorsignals aus einer Sensoreinrichtung, also aus einem Gerät oder einer Gerätekomponente zum Erfassen einer Person, wobei das Sensorsignal zum Beispiel einen Fingerabdruck oder ein anderes Authentisierungsmerkmal, wie beispielsweise ein Passwort oder eine PIN, beschreiben kann.

Anhand einer Identität des Fahrers erfolgt ein Festlegen von mehreren fahrerspezifischen Konfigurationsdatensätzen, wobei jeder der festgelegten Konfigurationsdatensätze Konfigurationsdaten jeweils eines Benutzerprofils des identifizierten Fahrers und zum Personalisieren des mindestens einen Kraftfahrzeugsystems beschreibt. Mit anderen Worten beschreibt jeder der festgelegten Konfigurationsdatensätze Konfigurationsdaten zu einem fahrerspezifischen Benutzerprofil des identifizierten Fahrers, wobei die Konfigurationsdatensätze ein Sub-Profil beschreiben können.

Beispielsweise kann das Identifizieren des Fahrers durch Feststellen einer Identität des Fahrers oder eines Profils des Fahrers erfolgen. Das Festlegen der mehreren fahrerspezifischen Konfigurationsdatensätze kann dann anhand der festgestellten Identität des festgestellten Profils erfolgen.

Es folgt ein Feststellen von mindestens einem weiteren Insassen, beispielsweise anhand eines weiteren, empfangenen Sensorsignals, das zum Beispiel ein Authentisierungsmerkmal des weiteren Insassen beschreiben kann, wobei der Insasse eine Person ist, die sich im Kraftfahrzeug befindet. In diesem Verfahrensschritt kann vorzugsweise festgestellt werden, ob sich mindestens ein weiterer Insasse im Kraftfahrzeug befindet und/oder wie viele weitere Insassen sich im Kraftfahrzeug befinden und/oder wer sich zusätzlich zum Fahrer im Kraftfahrzeug befindet und/oder welchen Sitzplatz der mindestens eine weitere Insasse einnimmt.

Anhand eines Ergebnisses des Feststellens des mindestens einen weiteren Insassen erfolgt ein Festlegen einer Intension des festgestellten Fahrers, mit der er das Kraftfahrzeug aktuell benutzt. Stellt die Personalisierungseinrichtung beispielsweise fest, dass sich außer dem Fahrer noch seine Ehefrau und seine Kinder im Kraftfahrzeug befinden, kann beispielsweise aufgrund von Erfahrungswerten festgestellt werden, dass seine aktuelle Fahrt zum Beispiel eine private Fahrt sein kann.

Anhand der festgelegten Intention erfolgen ein Auswählen eines Personalisierungsmodus aus einer Mehrzahl an Personalisierungsmodi, wobei der aus-gewählte Personalisierungsmodus eine Teilmenge der festgelegten fahrerspezifischen Konfigurationsdatensätze vorgibt, und ein Konfigurieren des mindestens einen Kraftfahrzeugsystems anhand eines durch den ausgewählten Personalisierungsmodus vorgegebenen fahrerspezifischen Konfigurationsdatensatzes. Hierzu kann beispielsweise der ausgewählte Personalisierungsmodus aktiviert werden, das heißt die Personalisierungseinrichtung kann in dem ausgewählten Personalisierungsmodus betrieben werden.

Mit anderen Worten erfolgt ein insassenabhängiges Konfigurieren des Kraftfahrzeugsystems. Das Kraftfahrzeugsystem kann beispielsweise eine Favoritenliste von Radiosendern einstellen oder zum Beispiel eine Liste derjenigen Navigationsziele, die der Benutzer zuletzt mit seiner Familie angefahren hat. Die Teilmenge der festgelegten Konfigurationsdatensätze kann beispielsweise durch einen Personalisierungsmodus für eine Fahrt des Fahrers mit seiner Ehefrau und seinen zwei Kindern vorgegeben sein, oder für eine Fahrt, bei der der Fahrer nicht alleine, sondern mit mindestens zwei weiteren Personen unterwegs sein kann. Dabei wird berücksichtigt, dass sich der Fahrer in Anwesenheit weiterer Passagiere, beispielsweise bei Anwesenheit seiner Familie oder Geschäftspartner, anders verhält und andere Motivationen für die Fahrt hat.

Mit anderen Worten werden durch das erfindungsgemäße Verfahren ein Konzept und eine technische Lösung bereitgestellt für die Realisierung von fahrerspezifischen Benutzerprofilen, die von den Insassen im Kraftfahrzeug abhängt. Hierdurch wird berücksichtigt, dass sich das Verhalten des Fahrers situationsabhängig unterscheidet, und ob weitere Insassen im Kraftfahrzeug sind oder nicht und, falls ja, wer die Passagiere sind.

Der Erfindung liegt die Erkenntnis zugrunde, dass für diese unterschiedlichen Situationen ein individuelles Benutzerprofil sinnvoll ist. Das erfindungsgemäße Verfahren ermöglicht, sowohl dem Fahrer als auch einem weiteren Insassen, das Mitführen von zum Beispiel gekauften Funktions-, Applikations- und Hardware-Ressourcen in ein Kraftfahrzeug. Das erfindungsgemäße Verfahren ermöglicht das Mitführen von solchen beispielhaften Funktions-, Applikations- und Hardware-Ressourcen durch einen der Insassen und das Erproben dieser Funktions-, Applikations- und Hardware-Ressourcen durch den Fahrer, solange der weitere Insasse sich in dem Kraftfahrzeug befindet.

Dadurch, dass der Fahrer weniger Zeit damit verbringt, manuell die Einstellungen zu optimieren, kann er noch mehr Aufmerksamkeit dem Fahrgeschehen widmen, wodurch eine Fahrsicherheit erhöht wird.

Jeder der Konfigurationsdatensätze kann Konfigurationsdaten zu zum Beispiel einer vorbestimmten Favoritenliste und/oder mindestens einem vorbestimmten Navigationsziel und/oder vorbestimmte Kontaktdaten und/oder eine vorbestimmte Bilddatei als Hintergrundbild eines Bildschirms und/oder vorbestimmte Einstellungen zu einem Aktivierungszustand des Kraftfahrzeugs umfassen. Das Vorbestimmen der jeweiligen Parameter kann dabei zum Beispiel erfolgen, indem dem jeweiligen Parameter, also der beispielhaften Favoritenliste oder der beispielhaften Liste von Navigationszielen, in Abhängigkeit von dem festgestellten mindestens einen weiteren Insassen und/oder in Abhängigkeit der prädizierten Intension zugeordnet sein kann.

Diese Parameter sind Parameter, deren Personalisierung besonders wichtig sind, da sie entweder zum Betreiben des Kraftfahrzeugs sehr relevant sind oder besonders bevorzugte Parameter sind, beispielsweise das Hintergrundbild des Bildschirms, was häufig vom Fahrer während einer Fahrt gewünscht ist.

Gemäß einer bevorzugten Ausführungsform des erfindungsgemäßen Verfahrens kann die Personalisierungseinrichtung in einem Bedienmodus betrieben werden. Die Personalisierungseinrichtung kann im Bedienmodus ein Empfangen eines Bediensignals durchführen, das eine Bedienhandlung zum Vorgeben des ausgewählten Personalisierungsmodus als zu aktivierenden Bedienmodus beschreibt, wobei das Festlegen der Fahrerintention zusätzlich in Abhängigkeit von dem ausgewählten Personalisierungsmodus erfolgen kann. Dem Fahrer des Kraftfahrzeugs kann ermöglicht werden, zum Beispiel in Abhängigkeit von einer aktuellen Stimmung oder Verfassung denjenigen Konfigurationsdatensatz, oder eine Tendenz der Benutzereinstellungen, mit dem das Kraftfahrzeug konfiguriert werden soll, selbst auszuwählen. Diese Ausführungsform gibt dem Fahrer also die Möglichkeit, Einfluss auf die Einstellungen zu nehmen. Ist der Fahrer zum Beispiel mit Geschäftspartner unterwegs und möchte mit diesen jedoch ausnahmsweise einen privaten Ausflug machen, kann er so die Benutzereinstellungen an seine Motivation anpassen.

Das Festlegen der Fahrerintention kann vorzugsweise durch Prädizieren oder Prognostizieren der Fahrerintention in Abhängigkeit von dem Feststellen des mindestens einen weiteren Insassen erfolgen. Die Auswahl der Benutzereinstellungen wird dadurch sehr viel individueller.

Zum Feststellen des mindestens einen weiteren Insassen kann die Personalisierungseinrichtung vorzugsweise eine Identität des mindestens einen weiteren Insassen feststellen, beispielsweise anhand eines Sensorsignals einer beispielhaften Kamera, wobei das Sensorsignal zum Beispiel einen Gesichtsscan des weiteren Insassen beschreiben kann. Das Festlegen der Intension des Fahrers kann dann anhand der festgestellten Identität des mindestens einen weiteren Insassen erfolgen. Hierdurch kann die individuelle Passagierbesetzung in dem Kraftfahrzeug festgestellt werden. Mit anderen Worten können Benutzerprofile bereitgestellt werden, die auf eine Zusammensetzung bestimmter Personen abgestimmt ist.

Alternativ oder zusätzlich kann zum Feststellen des mindestens einen weiteren Insassen durch die Personalisierungseinrichtung ein Feststellen einer Klassifikation des mindestens einen weiteren Insassen erfolgen. Das Feststellen der Klassifikation kann beispielsweise das Feststellen einer Eigenschaft des mindestens einen weiteren Insassen umfassen, beispielsweise das Feststellen eines Alters und/oder eines Geschlechts des mindestens einen weiteren Insassen. Anhand dieser Eigenschaft kann dann der mindestens eine weitere Insasse in eine vorgegebene Insassenkategorie eingeteilt werden, beispielsweise in die Kategorie "Erwachsener", "Kind", "Familie", oder "Kollegen". Mit anderen Worten kann ein Zuordnen zum Beispiel einer Identität des mindestens einen weiteren Insassen in eine vorgegebene Kategorie erfolgen oder in eine vorgegebene Klassifikation oder in eine vorgegebene Personengruppe.

Gemäß dieser Ausführungsform des erfindungsgemäßen Verfahrens kann das Prädizieren der Intension des Fahrers anhand oder in Abhängigkeit von der festgestellten Klassifikation des mindestens einen weiteren Insassen erfolgen. Hierdurch können geeignete Benutzereinstellungen noch genauer bestimmt werden.

Gemäß einer Weiterbildung kann das Feststellen der Klassifikation des mindestens einen weiteren Insassen erfolgen in Abhängigkeit von: einem festgestellten Alter oder einer festgestellten Altersgruppe des festgestellten mindestens einen weiteren Insassen; und/oder einer festgestellte aktuellen Insassenkombination; und/oder einer festgestellten Identität des jeweiligen mindestens einen weiteren Insassen; und/oder eines festgestellten Sitzplatzes des festgestellten, mindestens einen weiteren Insassen. Hierzu kann beispielsweise ein Feststellen einer aktuellen Insassenkombination und/oder eines Sitzplatzes des mindestens einen weiteren Insassen und/oder einer Sitzplatzkombination mehrerer weiterer Insassen erfolgen. Solche Klassifikationen ermöglichen ein besonders fahrsituationsspezifisches Konfigurieren des Kraftfahrzeugsystems.

Durch eine weitere Ausführungsform des erfindungsgemäßen Verfahrens kann zum Beispiel über maschinelles Lernen die Personalisierungseinrichtung auf eine längerfristige Änderung der Präferenz des Benutzers eingehen. Dies kann beispielsweise dann der Fall sein, falls der Fahrer zum Beispiel über mehrere Jahre hinweg neue oder andere Verhaltensweisen entwickelt. Gemäß dieser Ausführungsform kann die Personalisierungseinrichtung ein Feststellen wenigstens eines durch eine Bedienhandlung des Benutzers des Kraftfahrzeugs gesteuerten Umkonfigurationsvorgangs zum Ändern oder Anpassen des Konfigurationsdatensatzes des ausgewählten Personalisierungsmodus erfolgen. Mit anderen Worten kann ein manuelles Umkonfigurieren des Kraftfahrzeugsystems festgestellt werden. Die Bedienhandlung kann dabei eine Bedienhandlung des Fahrers und/oder des mindestens einen weiteren Insassen sein.

In Abhängigkeit von dem festgestellten Umkonfigurationsvorgang kann der geänderte Konfigurationsdatensatz gespeichert werden, beispielsweise in einem Datenspeicher des Kraftfahrzeugs und/oder der Personalisierungseinrichtung. Es folgt ein Zuordnen des gespeicherten Konfigurationsdatensatzes zu der festgelegten Intension.

Hierzu kann die Personalisierungseinrichtung beispielsweise eine "Deep-Learning-Engine" betreiben, wobei die Deep-Learning-Engine anhand einer Information zu der Bedienhandlung diese als Erfahrungswert nutzen kann, um eine Präferenz des Fahrers in einer bestimmten Fahrsituation mit einer bestimmten Insassenkonstellation zum Beispiel zu prädizieren. Unter einem Erfahrungswert wird ein Wert oder eine Angabe verstanden, der/die eine durch die Bedienhandlung ausgelöste Funktion oder Einstellungsänderung der Insassen-Konstellation zuordnet und zum Beispiel eine statistische Analyse durchführen kann, die eine Aussage zu einer Wahrscheinlichkeit einer hohen Relevanz dieser Funktion als Grundeinstellung treffen kann. Mit anderen Worten kann ein Erfahrungswert zum Beispiel ein numerischer Wert oder ein Zuordnungswert sein. Unter einem Erfahrungswert kann auch eine funktionelle Abhängigkeit oder eine funktionelle Zuordnung verstanden werden, die eine Aussage darüber trifft, ob eine manuelle Einstellungsänderung durch den Fahrer eine hohe Präferenz hat.

Unter einer Deep-Learning-Engine ("Deep-Learning-Einrichtung") wird ein Gerät oder ein Programm verstanden, welches sogenanntes Deep-Learning (tiefgehendes Lernen, maschinelles Lernen) auf eine Vielzahl von Daten anwenden kann. Mit anderen Worten ist die Deep-Learning-Engine eine hochentwickelte Anwendung zum Durchführen von tiefgehendem Lernen, also eine Umsetzung von künstlicher Intelligenz. Mit anderen Worten sind sowohl künstliche Intelligenz, als auch Maschinenlernen und tiefgehendes Lernen, mittels der Deep-Learning-Engine umsetzbar. Die Deep-Learning-Engine kann beispielsweise als tiefgehendes, künstliches neuronales Netzwerk ausgebildet sein, also, mit anderen Worten, dazu eingerichtet sein, mittels einer Methode des maschinellen Lernens eine Vielzahl von Erfahrungswerten nach einem vorbestimmten Algorithmus und anhand der bereits gespeicherten Vielzahl von Erfahrungswerten gemäß der darin enthaltenen Logik, wie zum Beispiel eine Korrelation, auszuwerten. Hierzu können auch weitere logische Verknüpfungen in der Deep-Learning-Engine erstellt werden.

Die gestellte Aufgabe wird gelöst durch eine Ausführungsform der erfindungsgemäßen Personalisierungseinrichtung, die dazu eingerichtet ist, die eine Personalisierungseinrichtung betreffenden Verfahrensschritte eines Verfahrens der oben beschriebenen Ausführungsformen des erfindungsgemäßen Verfahrens durchzuführen. Die Personalisierungseinrichtung kann beispielsweise als ein Geräteverbund, Gerät oder als System mehrerer Steuerchips ausgestaltet sein. Es ergeben sich die oben genannten Vorteile.

Vorzugsweise kann die Personalisierungseinrichtung eine Prozessoreinrichtung aufweisen, also eine Gerätekomponente oder ein Bauteil zur elektronischen Datenverarbeitung. Die Prozessoreinrichtung kann vorzugsweise mindestens einen Mikrocontroller und/oder mindestens einen Mikroprozessor aufweisen. In einer optionalen Speichereinrichtung, also in einem optionalen Datenspeicher zum Beispiel des Kraftfahrzeugs oder der Personalisierungseinrichtung, kann ein Programmcode abgelegt sein, der dazu eingerichtet sein kann, bei Ausführen durch die Prozessoreinrichtung die Personalisierungseinrichtung dazu zu veranlassen, die die Personalisierungseinrichtung betreffenden Verfahrensschritte des erfindungsgemäßen Verfahrens durchzuführen.

In einer besonders und geeigneten Ausgestaltung der Personalisierungseinrichtung kann diese eine Sensoreinrichtung aufweisen, also ein Gerät oder eine Gerätekomponente zum Erfassen einer Eigenschaft eines Objekts, wobei die Sensoreinrichtung beispielsweise einen Fingerabdrucksensor oder einen Gesichtsscanner aufweisen kann, umfassen. Zusätzlich kann die Personalisierungseinrichtung eine Fahreridentifizierungseinrichtung aufweisen, eine Insassenerkennungseinrichtung (die auch als "Insassenerfassungs-, Insassenklassifizierungs- und Insassenidentifizierungseinrichtung" bezeichnet werden kann), und eine Benutzerprofilverwaltungseinrichtung. Die Fahreridentifizierungseinrichtung kann beispielsweise als Steuerchip mit einer geeigneten Software zum Identifizieren des Fahrers anhand des beispielhaften Sensorsignals ausgestaltet sein. Die Insassenerkennungseinrichtung kann beispielsweise dazu eingerichtet sein, das Erfassen, Klassifizieren und/oder Identifizieren des mindestens einen weiteren Insassen durchzuführen. Dabei können die Fahreridentifizierungseinrichtung und die Insassenerkennungseinrichtung beispielhaft baulich zusammengefasst sein. Die Benutzerprofilverwaltungseinrichtung kann ebenfalls beispielsweise als Chip mit einem Mikroprozessor und/oder einem Mikrocontroller ausgestaltet sein und zur elektronischen Datenverarbeitung eingerichtet sein.

Die gestellte Aufgabe wird, unter Erreichen der weiter genannten Vorteile, gelöst durch ein Kraftfahrzeug, das eine Ausführungsform der erfindungsgemäßen Personalisierungseinrichtung aufweist. Das Kraftfahrzeug kann vorzugsweise als Kraftwagen ausgestaltet sein, beispielsweise als Personenkraftwagen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung zu einer Ausführungsform der erfindungsgemäßen Personalisierungseinrichtung; und
- Fig. 2: eine schematische Darstellung zu einer Ausführungsform des erfindungsgemäßen Verfahrens.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

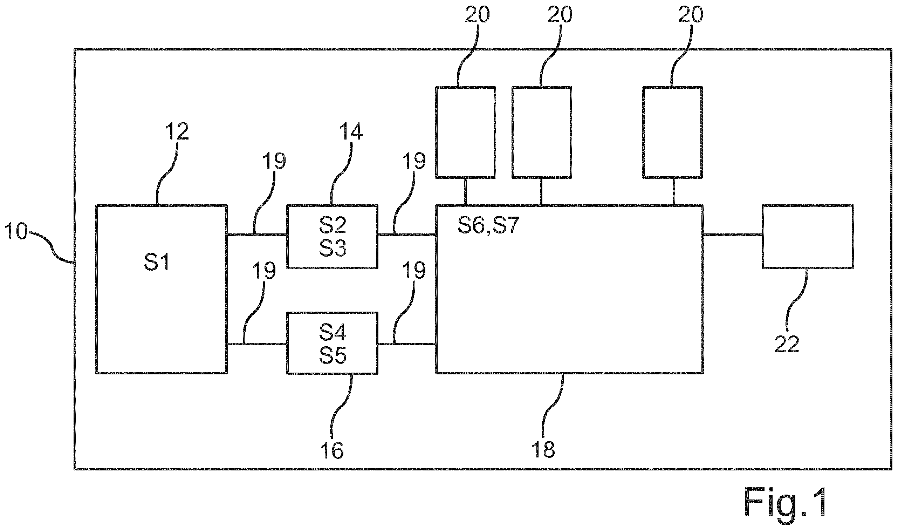

Die Fig. 1 veranschaulicht das Prinzip der erfindungsgemäßen Personalisierungseinrichtung, die zum Beispiel als Steuergerät eines Kraftfahrzeugs oder als Steuerchip ausgestaltet sein kann, anhand eines ersten Ausführungsbeispiels.

Die Personalisierungseinrichtung 10 kann hierzu beispielsweise eine Sensoreinrichtung 12 aufweisen, also zum Beispiel ein Gerät oder eine Gerätekomponente zum Erfassen einer Eigenschaft eines Benutzers oder eines Gegenstandes. Hierzu kann die Sensoreinrichtung 12 beispielsweise einen Sensor oder mehrere Sensoren, vorzugsweise ein Set an Sensoren, zum Erfassen und/oder Erkennen eines Menschen und/oder einer Person aufweisen. Zusätzlich oder alternativ kann die Sensoreinrichtung 12 zum Detektieren oder Erfassen einer Identität ausgestaltet und eingerichtet sein, und/oder zum Klassifizieren einer Person. Die Sensoreinrichtung 12 kann hierzu beispielsweise einen oder mehrere Innenkameras aufweisen und/oder einen oder mehrere Fingerabdrucksensoren und/oder einen oder mehrere Sensoren zum Detektieren eines Kraftfahrzeugschlüssels und/oder eine oder mehrere Außenkameras. Die Sensoreinrichtung 12 kann beispielsweise ein Sensorsignal erzeugen, das beispielsweise ein Bild eines Gesichts des Fahrers und/oder eines weiteren Insassen beschreiben kann, oder beispielhaft einen Fingerabdruck des Fahrers und/oder des weiteren Insassen.

Die Personalisierungseinrichtung 10 kann zusätzlich oder alternativ eine Fahreridentifizierungseinrichtung 14 aufweisen, die beispielsweise als Steuerplatine mit einem Mikroprozessor und/oder einem Mikrocontroller ausgestaltet sein kann, wobei die Fahreridentifizierungseinrichtung 14 dazu eingerichtet sein kann, anhand des beispielhaften Sensorsignals den Fahrer zu identifizieren. Hierzu kann die Fahreridentifizierungseinrichtung 14 beispielsweise den durch das Sensorsignal beschriebenen Fingerabdruck mit einem Bild eines gespeicherten Fingerabdrucks vergleichen.

Die Personalisierungseinrichtung 10 kann optional als "Kraftfahrzeug-Fahrer-Personalisierungs-System" bezeichnet werden. Die Personalisierungseinrichtung 10 kann vorzugsweise als Steuergerät oder als Funktion in einem Steuergerät oder zentral in zum Beispiel einem Gateway oder in einem Infotainmentsystem ausgestaltet sein. Die Personalisierungseinrichtung 10 kann dabei beispielsweise einen Programmcode zum Durchführen des erfindungsgemäßen Verfahrens aufweisen.

Eine optionale Insassenerkennungseinrichtung 16, die auch als "Insassenerfassungs-, Insassenklassifizierungs- und Insassenidentifizierungseinrichtung" bezeichnet werden kann, kann in ihrer Funktionsweise und ihrer Einrichtung derjenigen der Fahreridentifizierungseinrichtung 14 entsprechen und dazu eingerichtet sein, einen weiteren Insassen des Kraftfahrzeugs zu identifizieren und/oder zu klassifizieren. Zum Klassifizieren des weiteren Insassen kann beispielsweise vorgesehen sein, dass zunächst anhand des beispielhaften Fingerabdrucks die Identität des Insassen festgestellt werden kann und anhand der abgeleiteten Identität der Insasse klassifiziert wird, das heißt in eine Kategorie eingeordnet werden kann. Wird der Insasse beispielsweise als Person mit einem vorbestimmten Namen identifiziert, kann beispielsweise anhand einer digitalen Zuordnungstabelle abgeleitet werden, dass es sich bei dem Insassen beispielsweise um einen Mann handelt und/oder um ein Familienmitglied. Optional können die Fahreridentifizierungseinrichtung und die Insassenerkennungseinrichtung baulich miteinander gekoppelt sein oder zum Beispiel durch ein und dasselbe Bauteil verwirklicht werden.

Eine Benutzerprofilverwaltungseinrichtung 18 kann beispielsweise als weitere Steuerplatine mit einer Prozessoreinrichtung ausgestaltet sein oder mit einer Prozessoreinrichtung der Personalisierungseinrichtung 10 verbunden sein. Die Benutzerprofilverwaltungseinrichtung 18 kann auch als Benutzerprofilverwaltungssystem bezeichnet werden.

Die Einrichtungen der Personalisierungseinrichtung 10 sind im Beispiel der Fig. 1 durch Datenkommunikationsverbindungen 19 miteinander verbunden. Eine Datenkommunikationsverbindung 19 kann beispielhaft drahtgebunden ausgestaltet sein, beispielsweise als Datenbus des Kraftfahrzeugs. Alternativ kann die Datenkommunikationsverbindung 19 zum Beispiel eine drahtlose Datenkommunikationsverbindung sein, beispielsweise eine WLAN- oder Bluetooth-LE-Verbindung.

Das Beispiel der Fig. 1 zeigt zusätzlich optionale personalisierte Applikationen 20, sogenannte Anwendungen oder Anwenderprogramme. Diese können dabei zum Beispiel als Programmcode vorliegen und zum Beispiel in einer Speichereinrichtung (in der Fig. 1 nicht gezeigt) der Personalisierungseinrichtung 10 vorliegen.

Die Fig. 1 zeigt weiterhin eine optionale Benutzerprofilverwaltungs-Schnittstelle 22, die vorzugsweise als computergestützte Benutzerschnittstelle ausgestaltet sein kann.

Das Beispiel der Fig. 1 kann optional als Beispiel einer Systemarchitektur für eine als Passagier-abhängiges oder Insassen-abhängiges Fahrer-Verwendungs-Profilsystem ausgestaltete Personalisierungseinrichtung 10 angesehen werden.

Die einzelnen Komponenten des Beispiels der Fig. 1 werden im Folgenden noch einmal beispielhaft beschrieben.

Die Sensoreinrichtung 12 kann einen oder mehrere Sensoren umfassen, der/die für ein Erfassen und/oder ein Autorisieren einer (menschlichen) Identität eingerichtet sein kann. Zusätzlich oder alternativ kann die Sensoreinrichtung 12 zum Erkennen und/oder Klassifizieren eines Menschen eingerichtet sein. Die Sensoreinrichtung 12 kann dabei zum Beispiel einen oder mehrere der folgenden Sensoren aufweisen:
- Eine oder mehrere Innenkameras des Kraftfahrzeugs, beispielsweise für den Fahrer und/oder die Passagiere, das heißt beispielhaft kann eine Kamera auf den Fahrer und/oder auf einen oder mehrere Insassen (als zum Beispiel auf die Sitzplätze) ausgerichtet sein. Eine optionale Ausgestaltung der Innenkamera kann beispielsweise vorsehen, dass diese in oder an einem Rücksitz des Kraftfahrzeugs angeordnet sein kann. Vorzugsweise kann eine Innenraumkamera als 360-Grad-Kamera ausgestaltet sein, das heißt ein Rundumbild im Innenraum aufnehmen.
- Einen der mehrere Sensoren zum Erfassen/Detektieren eines "smarten" Kraftfahrzeugschlüssels, beispielsweise durch Erfassen eines RFID-Codes oder eines Funksignals des Fahrzeugschlüssels. Geeignete Mittel und Alternativen sind dem Fachmann aus dem Stand der Technik bekannt.
- Einen oder mehrere biometrische Identifizierungssensoren, beispielsweise einen oder mehrere Sensoren zum Erfassen eines Fingerabdruckes und/oder einer Augeniris und/oder eines Gesichts eines Insassen.
- Einen oder mehrere Außenkameras, die vorzugsweise einen Fahrer und/oder einen Insassen bereit sensieren oder erfassen können, sobald dieser sich außerhalb des Kraftfahrzeugs diesem nähert. Geeignete Näherungssensoren sind dem Fachmann aus dem Stand der Technik bekannt.
- Einen oder mehrere Sensoren zum Erfassen/Detektieren eines persönlichen mobilen Endgeräts, beispielsweise eines portablen, mobilen Endgeräts, welches beispielhaft als Smartphone oder als Tablet-PC ausgestaltet sein kann. Ein solches mobiles Gerät kann explizit oder implizit mit einem Profil oder einer Identität des Benutzers assoziiert sein. Hierzu kann das beispielhafte mobile Endgerät zum Beispiel ein Funksignal an die Sensoreinrichtung 12 übertragen, wobei die Sensoreinrichtung 12 dazu eingerichtet sein kann, aus einem solchen Funksignal einen damit übertragenen Identifizierungscode und/oder eine dadurch beschriebene Gerätenummer des mobilen, portablen Endgeräts zu erfassen. Anhand einer solchen beispielhaften Gerätenummer kann dann zum Beispiel auf die Identität der Person, die sich dem Kraftfahrzeug nähert, geschlossen werden.
- Erfassen/Detektieren eines tragbaren Geräts, vorzugsweise eines tragbaren "smarten" Geräts, welches in der oben beschriebenen Weise vorzugsweise explizit oder implizit mit einem Profil oder eine Identität des Benutzers assoziiert sein kann. Beispielhafte tragbare Geräte sind Fitnessarmbänder oder Bauchgurte oder Fitness-Armbanduhren.
- Einen oder mehrere Sensoren zum Erfassen einer Präsenz einer Person, der/die zum Beispiel in einem Kraftfahrzeugsitz integriert sein kann. Hierzu kann beispielsweise ein kapazitiver Sensor verwendet werden.
- Einen oder mehrere Sensoren zum Erfassen eines Status einer oder mehrerer Kraftfahrzeugtüren und/oder Sitzgurte. Geeignete Sensoren sind dem Fachmann aus dem Stand der Technik bekannt.

Die Sensoreinrichtung 12 kann zum Beispiel ein Sensorsignal erzeugen (Verfahrensschritt S1), das den beispielhaften, erfassten Fingerabdruck oder zum Beispiel den Gesichtsscan als Rohdaten beschreiben kann. Dieser Ausgang des Sensors beziehungsweise der Sensoren kann der Fahreridentifizierungseinrichtung 14 und/oder der Insassenerkennungseinrichtung 16 zur Verfügung gestellt werden, indem das erzeugte Sensorsignal an diese Einrichtungen übertragen werden kann.

Gemäß dem Beispiel der Fig. 1 kann die Fahreridentifizierungseinrichtung 14 die durch das Sensorsignal beschriebenen Daten als Eingangsgröße verwenden. Die Fahreridentifizierungseinrichtung 14 kann dazu eingerichtet sein, den Fahrer mittels einer oder einer Kombination mehrerer der folgenden Methoden/Technologien zu identifizieren (S2):
- Erfassen oder Detektieren eines Kraftfahrzeugschlüssels, wobei der erfasste Kraftfahrzeugschlüssel beispielsweise anhand eines Identifikationscodes des Kraftfahrzeugschlüssels und/oder einer Information über den Benutzer einem Benutzer zugeordnet werden kann, wobei daraufhin auf den Benutzer zurückgeschlossen werden kann;
- Biometrische Identifikation des Benutzers, beispielsweise über einen Fingerabdruck, einem Erfassen eines Gesichtes, einem Erfassen einer Iris, einem Erfassen eines persönlichen mobilen Geräts und/oder eines Handgeräts, das explizit oder implizit mit einem Profil und/oder einer Identität des Benutzers assoziiert wird oder werden kann;
- Erfassen eines tragbaren, "smarten" Geräts, also beispielsweise eines sogenannten "Wearables", das als dem Fachmann aus dem Stand der Technik bekannten tragbaren Accessoire zur Datenverarbeitung ausgestaltet sein kann, wobei das tragbare Gerät explizit oder implizit mit einem Profil und/oder einer Identität eines Benutzers assoziiert werden kann;
- Ein Sensor oder Sensoren zum Erfassen einer Präsenz oder Gegenwart des Benutzers, wobei der Sensor oder die Sensoren beispielsweise als kapazitiver Näherungssensor ausgestaltet sein kann/können, und vorzugsweise in zum Beispiel einem Kraftfahrzeugsitz angeordnet sein können; und/oder
- einen Sensor oder mehrere Sensoren zum Erfassen eines Status von Kraftfahrzeugtüren, also beispielsweise zum Erfassen, ob eine Tür geöffnet und/oder geschlossen wurde; und/oder einen oder mehrere Sensoren zum Erfassen eines Status eines oder mehrerer Sitzgurte, wobei beispielhaft erfasst werden kann, ob ein Sitzgurt geschlossen wurde; hierbei kann beispielsweise ebenfalls abgeleitet werden, auf welchem Platz sich ein Insasse befinden kann.

Zusätzlich oder alternativ kann die Fahreridentifizierungseinrichtung 14 die erfasste und erkannte Fahreridentität und/oder ein Profil des Fahrers bereitstellen. Zum Bereitstellen der erfassten Fahreridentität oder des erfassten Profils des Fahrers kann die Fahreridentifizierungseinrichtung 14 ein entsprechendes Signal erzeugen und an die Benutzerprofilverwaltungseinrichtung 18 übertragen (S3).

Die Insassenerkennungseinrichtung 16 kann beispielsweise detektieren und/oder erfassen, ob sich andere (menschliche) Passagiere oder Insassen außer dem Fahrer in dem Kraftfahrzeug befinden, beispielsweise auf einem vorderen Beifahrersitz und/oder auf hinteren Kraftfahrzeugsitzen. Dies kann beispielsweise mittels einer oder mehrerer Innenraumkameras zum Überwachen der Passagiere und/oder Sitze auf dem Beifahrersitz und/oder auf der Rückbank erfolgen, oder über zum Beispiel eine einzige, den Innenraum des Kraftfahrzeugs überwachenden Kamera. Solche Kameras können vorzugsweise Bestandteil der Sensoreinrichtung 12 sein, die als Eingangsgröße für die Insassenerkennungseinrichtung 16 zum Beispiel ein entsprechendes Kamerabild bereitstellen können. Beispielsweise über einen bildbasierten Klassifikator, beispielsweise eine Software zur Gesichtserkennung und/oder einer Software zur Bildanalyse, kann festgestellt werden (S4), ob sich weitere Insassen in dem Kraftfahrzeug befinden.

Alternativ kann im Verfahrensschritt S4 festgestellt werden, wie viele Insassen sich in dem Kraftfahrzeug befinden und/oder wer sich in dem Kraftfahrzeug befindet und/oder auf welchem Sitzplatz sich der oder die Insassen befinden. Optional können der oder die (menschlichen) Insassen im Kraftfahrzeug klassifiziert werden, beispielsweise mithilfe des bereits genannten bildbasierten Klassifikators. Eine beispielhafte Klasse, der der Insasse zugeordnet sein kann, kann beispielsweise aufgrund eines Alters erfolgen, beispielsweise kann ein Insasse der Klasse "Kinder" oder "Erwachsene" zugeordnet werden. Zum Einteilen oder Zuteilen zu den Klassen, also zum Klassifizieren, kann beispielsweise zunächst eine Identität des Insassen festgestellt werden, wobei für jede der Identitäten vorgegeben sein kann, welcher Klasse die entsprechende Identität zugeteilt ist/werden soll.

Zusätzlich oder alternativ kann das System, also die Insassenerkennungseinrichtung 16, feststellen, ob der Insasse oder die Insassen in dieser Konstellation bereits früher in dem Kraftfahrzeug zusammen unterwegs waren, beispielsweise mithilfe einer Bluetooth-ID. Die Bluetooth-ID kann dabei beispielsweise eine Identitätsnummer eines persönlichen mobilen Geräts des Benutzers sein, die auf dem Gerät abgespeichert sein kann. Solche "Bluetooth-Beacons" oder "Funkbake" können an dem mobilen Endgerät montiert sein und mithilfe von Funkempfängern im Kraftfahrzeug erfasst und/oder vermessen werden. Eine entsprechende Technik ist dem Fachmann aus Methoden des Stands der Technik zur Lokalisierung von Objekten zur zum Beispiel Triangulation oder Multilateration mithilfe von mobilen Funksystemen bekannt.

Optional kann die Insassenerkennungseinrichtung 16 eine Information darüber bereitstellen (S5), ob sich überhaupt weitere, vom Fahrer unterschiedliche Insassen in dem Kraftfahrzeug befinden. Die Insassenerkennungseinrichtung 16 kann, mit anderen Worten, als Ausgangsinformation eine Klassifizierungs-Information und/oder eine Konstellationsinformation und/oder Identität und/oder ein Profil des mindestens einen weiteren Insassen der Benutzerprofilverwaltungseinrichtung 18 bereitstellen, vorzugsweise inklusive einer Information zu einem Sitzplatz des jeweiligen, mindestens einen weiteren Insassen.

Die Benutzerprofilverwaltungseinrichtung 18 kann anhand der Eingangsgrößen oder Eingangsdaten aus der Fahreridentifizierungseinrichtung 14 und der Insassenerkennungseinrichtung 16 ein passendes Profil des Fahrers auswählen, wobei ein solches Profil auch als Sub-Profil bezeichnet werden kann.

Hierzu kann zum Beispiel die Benutzerprofilverwaltungseinrichtung 18 nach Authentifizierung/Authentisierung des Fahrers und des optionalen Passagiers (also des optionalen Insassen) zum Beispiel auf gespeicherte Daten, die jeweils ein entsprechendes Profil beschreiben können, zugreifen. Diese Daten oder Datensätze können zum Beispiel in einem Datenspeicher des Kraftfahrzeugs gespeichert sein, und/oder in einen oder mehreren persönlichen, mobilen Geräten und/oder beispielsweise in einer kraftfahrzeugexternen Servervorrichtung, wobei die kraftfahrzeugexterne Servervorrichtung beispielsweise als Daten-Cloud ausgestaltet sein kann.

Beispielhaft können diese Daten aus zuvor beobachtetem Verhalten des Benutzers (vorzugsweise des Fahrers) stammen, oder zum Beispiel von dem Benutzer selbst eingegeben worden sein. Zusätzlich oder alternativ kann der Benutzer Einstellungen, die durch die jeweiligen Daten beschrieben werden können, auswählen, zum Beispiel aus generischen Profilen, das heißt zum Beispiel aus Sammlungen vorgegebener Präferenzen.

Optional kann die Benutzerprofilverwaltungseinrichtung 18 Konstellations-Profile erzeugen und/oder auf solche zugreifen und/oder solche Konstellations-Profile anpassen. Das heißt Einstellungen in Bezug auf eine übereinstimmende Präsenz bestimmter Benutzer in dem Kraftfahrzeug, also eine bestimmte Zusammensetzung der Insassen und zum Beispiel zusätzlich in Abhängigkeit von ihren zugeordneten Rollen als Fahrer oder Mitfahrer, erzeugt und/oder angepasst werden. Ein neu erzeugtes Konstellations-Profil kann in dem beispielhaften Datenspeicher abgespeichert werden. Der Zugang zu solchen Konstellations-Profilen kann beispielsweise durch Zugriff auf den Datenspeicher erfolgen. Ein Aktualisieren und/oder Anpassen eines Konstellations-Profils kann beispielsweise dadurch erfolgen, dass ein Fahrerverhalten erfasst und mit zum Beispiel manuell durch den Fahrer durchgeführten, manuellen Änderungen der Einstellungen assoziiert werden kann. Ein Datensatz, der ein Sub-Profil für beispielsweise die Insassen-Konstellation "gesamte Familie mit Kindern" enthält, kann dann geändert und damit angepasst werden, indem die entsprechenden Daten zu den Einstellungen überschrieben werden.

Zusätzlich oder alternativ kann die Benutzerprofilverwaltungseinrichtung 18 die folgenden Informationen von der Fahreridentifizierungseinrichtung 14 und/oder der Insassenerkennungseinrichtung 16 empfangen (S6), wobei im Folgenden beispielhaft von einem Kraftfahrzeug mit fünf Sitzen ausgegangen werden kann. Es kann beispielsweise eine Information zu dem Fahrer bereitgestellt werden, beispielsweise anhand einer Identität oder dem Fahrer zugeordneten Identitätsnummer. Zusätzlich können Informationen zu einem Insassen auf einem Vordersitz, vorzugsweise dem Beifahrersitz, einem Insassen auf dem linken Rücksitz, eine Information zu einem Insassen auf dem mittleren Rücksitz und eine Information zu einem Insassen auf dem rechten Rücksitz bereitgestellt werden. Als Eingangsgrößen können, in der Reihenfolge der zuvor genannten Informationen, beispielsweise die folgenden, durch ein entsprechendes Eingangssignal beschriebenen Informationen bereitgestellt werden:
- Fahrer ("Driver"):
   Driver_ID
- Vordersitzinsasse ("Front-Seat Passenger"):
   Pass1_occupied status; (<Pass1_Classes> Pass1_ID)
- Passagier auf einem linken Rücksitz ("Rear-Seat-left Passenger"): Pass2_OccupiedStatus; (<Pass2_Classes> Pass2_ID)
- Passagier auf einem mittleren Rücksitz ("Rear-Seat mid Passenger"): Pass3_OccupiedStatus; (<Pass3_Classes> Pass3_ID)
- Passagier auf einem rechten Rücksitz ("Rear-Seat right Passenger"): Pass4_OccupiedStatus; (<Pass4_Classes>Pass4_ID).

Die Benutzerprofilverwaltungseinrichtung 18 kann Passagier-abhängige Personalisierungsmodi (PDPM) bereitstellen (S7), wobei beispielhaft der Fahrer des Kraftfahrzeugs manuell einstellen kann, welche Art dieser Personalisierungs-Modi er bevorzugt. Diese Personalisierungs-Modi können beispielsweise aus dem Datenspeicher abgerufen werden. Optional kann ein solcher Personalisierungs-Modus durch die Benutzerprofilverwaltungseinrichtung 18 veränderbar sein.

Die folgenden, beispielhaften Passagier-abhängigen Personalisierungs-Modi können beispielsweise sein:
- Ein erster Personalisierungs-Modus PDPM_1 kann beispielsweise für eine Passagier-unabhängige Personalisierung stehen, das heißt dem Fahrer ist egal, welches Subprofil ausgewählt wird.
   - Ein zweiter Personalisierungs-Modus PDPM_2 kann ein Modus zur Passagier-abhängigen Personalisierung sein, wobei Kriterien oder ein Kriterium berücksichtigt werden können, ob sich zumindest ein weiterer Passagier oder Insasse in dem Kraftfahrzeug befindet oder nicht. Fährt der Fahrer beispielsweise in seinem Kraftfahrzeug mit zwei Kindern und einer Frau, kann der Personalisierungs-Modus PDPM_2 beispielsweise ein Modus "Fahrer+Frau" oder "Fahrer und ein Kind" sein, das heißt entsprechend zugeschnittene Einstellungen beschreiben.
- In einem dritten optionalen Personalisierungs-Modus PDPM_3 kann beispielsweise eine Passagier-abhängige, also eine Insassen-abhängige Personalisierung erfolgen, die ein Kriterium oder Kriterien vorgeben kann, ob die Personalisierung zu allen Insassen oder Passgieren in dem Kraftfahrzeug passt. Dieser Personalisierungs-Modus kann beispielsweise vorgeben, dass, beispielsweise bei einer Konstellation mit insgesamt drei Insassen inklusive des Fahrers im Kraftfahrzeug, sollen dann diejenigen Sub-Profile zur Verfügung gestellt werden, deren Einstellungen für jeden der drei Insassen passen. Eine solche Information, ob die jeweiligen Einstellungen zu den Insassen passen, kann beispielsweise in einer entsprechenden Datei für die Einstellungen des Sub-Profils vorgegeben sein.

In einem Personalisierungs-PDPM_4 kann beispielsweise eine Passagier-abhängige Personalisierung ein Kriterium dahingehend vorgesehen sein, dass die Personalisierung zu mindestens einem aller Insassen in dem Kraftfahrzeug passt.
- Bei einer Konstellation-abhängigen Personalisierung kann in einem entsprechenden Personalisierungs-Modus dieser beispielsweise dem oben beschriebenen Personalisierungs-Modus PDPM_3 entsprechen, wobei die zusätzliche Einschränkung vorsehen kann, dass in diesem Modus nur solche Sub-Profile zur Verfügung gestellt werden können, auf die eine exakte Sitzposition der vorhandenen Insassen ebenfalls zutreffen, oder jeder der Insassen die vorgegebene Identität besitzt.
- Bei einer Passagier-abhängigen Personalisierung in Abhängigkeit einer Klassifizierung der Insassen und/oder belegten Sitze, das heißt der Sitzbelegung, können nur solche Sub-Profile bereitgestellt werden, die eine genaue Sitzordnung berücksichtigen können.

Zusätzlich oder alternativ kann die Benutzerprofilverwaltungseinrichtung 18 eine Fahrer-ID bereitstellen und/oder einen Status der Sitzbelegung des Kraftfahrzeugs sowie, optional, der Identitäten der Insassen oder Passagiere. Zusätzlich oder alternativ können entsprechende Personalisierungs-Modi für personalisierte Anwenderprogramme bereitgestellt werden.

Eine oder mehrere der beispielhaften personalisierten Applikationen 20, also der beispielhaften Anwenderprogramme, können Passagier-abhängig sein und dynamisch an das Daten- und/oder Parameterset angepasst werden. Dies kann beispielsweise während einer Fahrt und abhängig von Ereignissen und/oder Vorgängen der Benutzerprofilverwaltungseinrichtung 18 erfolgen. Mit anderen Worten kann in einem ausgewählten Personalisierungs-Modus, der beispielsweise durch den Fahrer mittels einer Spracheingabe oder einer anderen Bedienhandlung ausgewählt werden kann, ein Sub-Profil aus einer Sammlung von Sub-Profilen des Fahrers ausgewählt werden, wobei das ausgewählte Sub-Profil die Einstellungen der Applikationen 20 vorgeben kann. Hierbei können beispielsweise Anwenderprogramme ("Apps") personalisiert oder angepasst werden und/oder zum Beispiel eine Favoritenliste. Beispielhafte Anwendungen oder Anwenderprogramme können beispielsweise eine benutzerspezifische Liste sein, beispielsweise eine Liste der letzten Navigationsziele, eine Liste der letzten Anrufer oder Anrufe, oder eine Favoritenliste, beispielsweise eine Favoritenliste für Radiostationen.

Eine solche personalisierte Applikation kann zum Beispiel jeden Listeneintrag mit zum Beispiel einer Fahrer-ID oder einer Klassifikation markieren, also beispielhaft jeden Eintrag einer Master-Liste von Radiostationen unterschiedlichen Sub-Profilen oder Personalisierungs-Modi zuordnen. Beispielsweise kann jeder der Listeneinträge mit einer aktuellen Fahrer-ID inklusive eines Status der Sitzbelegung im Kraftfahrzeug markiert sein, optional zusätzlich zu einer Insassen-Klasse und/oder Identitäten oder IDs der weiteren Insassen zu einem Zeitpunkt, an dem ein entsprechendes Ereignis erfolgt.

Zusätzlich oder optional können personalisierte Applikationen gefilterte Listeneinträge beschreiben, die zum Beispiel nicht zu dem ausgewählten Personalisierungs-Modus passen und/oder nicht zu einer Identität oder ID des gegenwärtigen Fahrers und/oder einem gegenwärtigen Kraftfahrzeug-Sitzplatzbelegung-Status und/oder einer gegenwärtigen Klasse oder Klassifizierung der Insassen und/oder entsprechenden Profilen.

Zusätzlich oder alternativ kann ein solches Event, also eine Fahrt zum Beispiel in der aktuellen Konstellation, auch eine ID, also eine Identität, haben.

Wird von dem Fahrer beispielsweise der Personalisierungsmodus PDPM_1 ausgewählt und befindet sich zum Beispiel mindestens ein weiterer Passagier im Kraftfahrzeug, müssen zum Beispiel nur die letzten Einträge und Navigationsziele angezeigt werden, an denen der Fahrer nicht alleine im Kraftfahrzeug war zu demjenigen Zeitpunkt, als das Navigationsziel eingegeben wurde.

Ist beispielhaft der Personalisierungs-Modus PDPM_2 ausgewählt und wird damit vorgegeben oder vorbestimmt, und befindet sich beispielsweise zumindest ein weiterer Passagier oder Insasse in dem Kraftfahrzeug, können beispielsweise nur diejenigen, letzten Navigationsziele angezeigt werden, die üblicherweise oder bevorzugt dann angefahren werden, wenn alle Passagiere im Kraftfahrzeug sind.

Ist beispielsweise der Personalisierungs-Modus PDPM_3 ausgewählt und damit vorgegeben, und befindet sich zumindest ein weiterer Insasse in dem Kraftfahrzeug, also beispielsweise der Fahrer und ein weiterer Insasse, können beispielsweise nur diejenigen letzten Navigationsziele als Einträge angezeigt werden, die eingegeben wurden, als der Fahrer und der mindestens eine der Insassen sich zum Zeitpunkt der Eingabe in dem Kraftfahrzeug befunden haben.

Abhängig von einer erfassten Klasse des Insassen, vorzugsweise des mindestens einen weiteren Insassen, zum Beispiel Kindern auf der Rückbank, können zum Beispiel Medieninhalte des Infotainmentsystems und/oder Einstellungen (beispielsweise eine maximal einstellbare Lautstärke) automatisch eingestellt werden oder auf diese eingeschränkt werden. Zusätzlich oder alternativ können ein oder mehrere Profile oder Parameter zum Aufheben oder Sperren der Steuerung des Kraftfahrzeugs und/oder einer Lenkung des Kraftfahrzeugs erfolgen. Zusätzlich oder alternativ können beispielsweise Parameter eines Fahrerassistenzsystems automatisch geändert werden, sodass beispielhaft ein Komfortmodus anstelle eines dynamischen Modus eingestellt wird.

Befindet sich beispielsweise ein weiterer Insasse zu dem Fahrer im Kraftfahrzeug, optional abhängig von einer Identität dieses Insassen, kann beispielsweise eine Auswahl an Bildschirmen erfolgen, an denen ein spezifischer Inhalt bereitgestellt werden kann. Beispielhaft können Warnungen mit Bezug auf eine Fahrzeugführung oder ein Fahren des Kraftfahrzeugs nur auf einem Cluster an Instrumenten angezeigt werden und/oder eine Eingabe kann akzeptiert werden, beispielsweise eine Änderung des Navigationsziels. Solche Einstellungen können zum Beispiel automatisch gesetzt oder beschränkt werden.

Die persönliche Anwendung 20 kann beispielsweise eine Passagier-abhängige Anwendung 20 sein, die aus einem Auswahl-Pool ein Element auswählen kann, das während einer Fahrt verwendet werden soll. Ein solches Element kann beispielsweise ein Willkommens-Bildschirmbild sein oder zum Beispiel ein Hintergrundbild oder eine Computeranimation ("skinning") der Mensch-Maschine-Schnittstelle, oder ein Hintergrunddesign eines Displays. Alternativ kann ein solches Element beispielhaft ein Begrüßungstext sein. Solche personalisierten Anwendungen 20 können vorzugsweise das Element auswählen, um dieses entsprechend dem ausgewählten und damit vorgegebenen Personalisierungs-Modus und/oder zum Beispiel einer aktuellen Identität des Fahrers zu verwenden oder anzuzeigen. Alternativ oder zusätzlich kann das Verwenden oder Ausgeben, also beispielsweise Anzeigen, eines solchen Elements in Abhängigkeit von einer aktuellen Sitzbelegung des Kraftfahrzeugs und/oder aktuellen Identitäten der Insassen erfolgen. Das Markieren ("tagging") eines Elements kann beispielhaft durch den Fahrer ausgewählt werden oder automatisch erfolgen. Bei einer automatischen Markierung kann beispielsweise eine Identität des gegenwärtigen Fahrers berücksichtigt werden, eine gegenwärtige Sitzbelegung des Kraftfahrzeugs und/oder die Identitäten weiterer Mitinsassen zu dem Zeitpunkt, zu dem der Fahrer das Element, beispielsweise Hintergrundbild, erzeugt, auswählt und/oder aktualisiert.

Beispielhaft können verschiedene Willkommens-Bilder für einen Bildschirm heruntergeladen oder durch den Fahrer erzeugt werden, beispielsweise für unterschiedliche Besetzungen des Kraftfahrzeugs. Das System, also die Personalisierungseinrichtung 10, kann ein entsprechendes in Abhängigkeit von der gegenwärtigen Besetzung der Insassen im Kraftfahrzeug auswählen.

Personalisierte Anwendungen 20, die Insassen-abhängig sein können und die bestimmte Applikationen und/oder Funktionen ermöglichen und/oder ausschalten können, können für den Benutzer während der Fahrt verfügbar sein, beispielhaft als sogenannte "Function-on-Demand-Management-Funktion". Eine solche Applikation und/oder Funktion kann beispielsweise eine Einstellung einer Hardware sein. Beispielhafte personalisierte Anwendungen 20 können dabei sein:
- Personalisierte Anwendungen 20, die eine Verfügbarkeit, eine Applikation und/oder Funktion ermöglichen oder blockieren, die zum Beispiel für den Fahrer parallel geschaltet sein können, und/oder für die Benutzer während der Fahrt, vorzugsweise in Abhängigkeit von dem vorgegebenen Personalisierungs-Modus und zum Beispiel einer Identität des gegenwärtigen Fahrers, und/oder einer gegenwärtigen Sitzbelegung des Kraftfahrzeugs und/oder der Identitäten weiterer Insassen.
- Solche personalisierte Anwendungen 20 können optional eine Verfügbarkeit einer Applikation und/oder Funktion ermöglichen oder blockieren, die zum Beispiel für einen weiteren Insassen freigeschaltet sein kann, oder den Benutzer während der Fahrt, vorzugsweise in Abhängigkeit von dem vorgegebenen Personalisierungs-Modus und/oder der Identität des gegenwärtigen Fahrers, der gegenwärtigen Sitzbelegung des Kraftfahrzeugs und der gegenwärtigen Identitäten der weiteren Insassen.

In einem Beispiel kann beispielsweise eine "Function-on-Demand"-Applikation bereitgestellt sein, die zum Beispiel durch den Fahrer gekauft sein kann, wobei diese Applikation den gegenwärtigen Insassen in Abhängigkeit von dem vorgegebenen Personalisierungs-Modus zur Verfügung gestellt werden kann.

Gemäß einem weiteren Beispiel kann eine sogenannte "Function-on-Demand"-Applikation bereitgestellt werden, die zum Beispiel nicht von dem Fahrer gekauft wurde, sondern durch beispielsweise einen der weiteren Insassen. Die Funktion, das heißt zum Beispiel ein bestimmter Programmcode zum Durchführen der Funktion, kann beispielsweise auf einem mobilen Endgerät des Insassen abgespeichert sein und von diesem mobilen Endgerät - oder beispielsweise von einer Daten-Cloud aus dem Internet - heruntergeladen werden. Diese Applikation kann dann dem Kraftfahrzeug und dem Benutzer bereitgestellt werden, sobald sich der Passagier, der die Applikation gekauft hat, in dem Kraftfahrzeug befinden kann.

Optional können personalisierte Anwendungen 20 den Benutzern während der Fahrt zur Verfügung gestellt werden, die Insassen-abhängig sind und die zum Beispiel Funktionen über Leistungen einer Hardware-Komponente ermöglichen oder blockieren, wobei eine solche Funktion beispielsweise als "Hardware-Capability-on-Demand-Management-Funktion" bezeichnet werden kann. Solch personalisierte Anwendungen 20 ermöglichen und/oder blockieren eine solche Verfügbarkeit eines Hardware-Potentials, das zum Beispiel für den Fahrer freigeschaltet sein kann, sowie den anderen Benutzern während der Fahrt, vorzugsweise in Abhängigkeit von dem vorgegebenen Personalisierungs-Modus und zum Beispiel einer Identität des gegenwärtigen Fahrers, der gegenwärtigen Sitzbelegung im Kraftfahrzeug und Identitäten gegenwärtiger Passagiere. Optional können solche personalisierten Anwendungen die Hardware-Leistung oder die Hardware-Funktionalitäten ermöglichen und/oder blockieren, die zum Beispiel für einen Passagier freigeschaltet sein kann, einem Benutzer während der Fahrt, vorzugsweise in Abhängigkeit von dem vorgegebenen Personalisierungs-Modus und einer Identität des gegenwärtigen Fahrers, einer gegenwärtigen Sitzbelegung des Kraftfahrzeugs und Identitäten gegenwärtiger, weiterer Insassen.

Gemäß einem weiteren Beispiel kann als Hardware-Leistung oder Hardware-Funktionalität zum Beispiel eine Vergrößerung oder Steigerung einer Prozessorleistung sein, die beispielsweise von dem Fahrer gekauft wurde. Eine solche kann den aktuellen Insassen in Abhängigkeit von dem vorgegebenen Personalisierungs-Modus zur Verfügung gestellt werden. Alternativ kann eine solche Erhöhung der Prozessorleistung als Service von einem anderen Insassen als dem Fahrer gekauft worden sein, wobei diese Funktion dem Kraftfahrzeug und seinen Benutzern solange zur Verfügung gestellt werden kann, solange sich dieser Passagier in dem Kraftfahrzeug befindet.

Die Benutzerprofilverwaltungs-Schnittstelle 22 kann es dem Fahrer beispielsweise erlauben oder ermöglichen, den Personalisierungs-Modus und/oder die Einstellung für einen bestimmten Personalisierungs-Modus zu ändern. Hierzu kann dem Fahrer beispielsweise eine Bedieneinrichtung der Benutzerprofilverwaltungs-Schnittstelle 22 zur Verfügung gestellt werden, beispielsweise eine Tastatur oder eine Gerätekomponente zur Spracherkennung.

Mit anderen Worten kann eine manuelle Einflussnahme erfolgen, vorzugsweise vor der Auswahl des Sub-Profils. Mit anderen Worten kann der Fahrer vorgeben, welcher Personalisierungs-Modus genutzt werden soll.

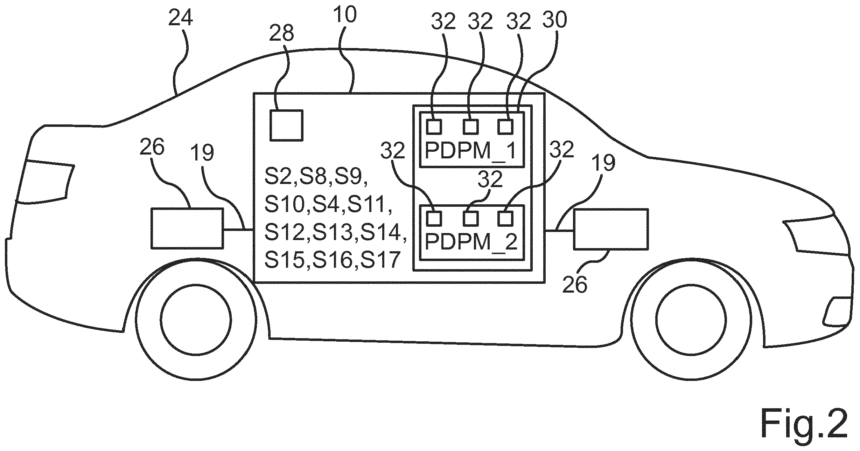

Die Fig. 2 veranschaulicht das Prinzip des erfindungsgemäßen Verfahrens anhand eines Ausführungsbeispiels, in dem ein Kraftfahrzeug 24 beispielsweise als Personenkraftwagen ausgestaltet und mehrere Kraftfahrzeugsysteme 26 aufweisen kann. Die Kraftfahrzeugsysteme 26 können beispielsweise ein Infotainmentsystem und ein Kombiinstrument sein oder beispielsweise ein Infotainmentsystem und eine Steuerung für eine Sitzposition.

Das Kraftfahrzeug 24 weist eine Personalisierungseinrichtung 10 auf, die beispielsweise die zur Fig. 1 beschriebene Personalisierungseinrichtung 10 sein kann. Sowohl die Personalisierungseinrichtung 10 der Fig. 2 als auch die Personalisierungseinrichtung 10 der Fig. 1 können jeweils eine Prozessoreinrichtung 28 aufweisen, die zum Beispiel mehrere Mikroprozessoren und/oder mehrere Mikrocontroller aufweisen kann. In der Fig. 1 wird die optionale Prozessoreinrichtung 28 aus Gründen der Übersichtlichkeit nicht gezeigt.

Die Personalisierungseinrichtung 10 der Fig. 2 zeigt zudem eine optionale Speichereinrichtung 30, die als gängiger Datenspeicher ausgestaltet sein kann. Auf diesem Datenspeicher kann ein Programmcode zum Durchführen des erfindungsgemäßen Verfahrens abgelegt sein.

Der Verfahrensschritt S2, das Identifizieren des Fahrers des Kraftfahrzeugs 24, wurde bereits zur Fig. 1 im Detail beschrieben. Über diesen Identifizierungsschritt kann also eine Identität des Fahrers festgestellt werden, anhand der mehrere fahrerspezifische Konfigurationsdatensätze 32 festgelegt werden können (S8). In der Speichereinrichtung 30 können beispielhaft sechs Konfigurationsdatensätze 32 abgelegt sein. Jeder der Konfigurationsdatensätze 32 kann dabei zum Beispiel unterschiedliche Einstellungen für das beispielhafte Infotainmentsystem und/oder die beispielhafte Steuerung der Sitzposition beschreiben, oder Varianten von Kombinationen. Alle diese Konfigurationsdatensätze sind dabei beispielhaft fahrerspezifisch für denselben Fahrer.

In dem Verfahrensschritt S4 können beispielsweise drei weitere Insassen festgestellt werden, zusätzlich können beispielsweise die Identitäten der Insassen, beispielsweise die Frau des Fahrers und die Kinder des Fahrers, sowie jeweils eine Altersgruppe (Erwachsene, Kinder) festgestellt werden.

Beispielhaft können die jeweils drei der Konfigurationsdatensätze 32 einem Personalisierungs-Modus (PDPM_1, PDPM_2) zugeordnet sein. Mit anderen Worten können im Personalisierungsmodus PDPM_1 die entsprechenden Konfigurationsdatensätze 32 zum Konfigurieren des Kraftfahrzeugsystems 26 oder der Kraftfahrzeugsysteme 26 (S9) zur Verfügung stehen.

Durch beispielsweise eine Analyse der so erhobenen Daten über alle Insassen oder über die weiteren Insassen kann beispielsweise mithilfe einer Deep-Learning-Engine, die zuvor über maschinelles Lernen auf das Verknüpfen von Insassen-Kombinationen und Absichten einer Fahrt mit dem Kraftfahrzeug trainiert wurde, im Verfahrensschritt S10 eine Intension des festgestellten Fahrers vor Benutzung des Kraftfahrzeugs 24 prädiziert werden (S10). Im Beispiel der Fig. 2 kann diese beispielsweise eine Familienfahrt sein. Anhand der prädizierten Intension können dann der oder die Personal-Modi PDPM_1 und/oder PDPM_2 als fahrerspezifische Personalisierungs-Modi zu der Intention "Familienfahrt" ausgewählt (S11), und zum Beispiel über einen Bildschirm des beispielhaften Infotainmentsystems oder über einen Bildschirm des Kombiinstruments angezeigt werden. Die beispielhaften Personalisierungs-Modi PDPM1, PDPM_2 können beispielsweise die Modi sein, die Einstellungen für eine Fahrt des Fahrers mit zwei Kindern und einer Frau umfassen, oder zum Beispiel eine Fahrt des Fahrers mit zwei Personen auf der Rückbank.

Der Fahrer kann beispielhaft manuell entscheiden, welcher Personalisierungsmodus (PDPM_1, PDPM_2) verwendet werden soll.

Beispielsweise kann einer der Konfigurationsdatensätze 32 eines Familienprofils die letzten Navigationsziele in einer Favoritenliste beschreiben, die zuletzt in der Insassen-Konstellation angefahren wurden, beispielsweise ein Freizeitpark oder die Adresse des Wochenendhauses der Familie.

Optional kann vorgesehen sein, dass der Fahrer durch zum Beispiel eine Eingabe mittels einer Bedienhandlung für das Bereitstellen der letzten Navigationsziele den Personalisierungs-Modus PDPM_1 auswählen kann (S17), für einen Bildschirmhintergrund jedoch den Personalisierungs-Modus PDPM_2. Mit anderen Worten kann der Fahrer für beispielsweise eine Auswahl von Navigationszielen oder anderer Anwenderprogramme angeben, welche Profilkategorie er haben möchte.

Im Beispiel der Fig. 2 sind die Konfigurationsdatensätze 32 als in der Personalisierungseinrichtung 10 des Kraftfahrzeugs abgespeichert gezeigt, alternativ können die Konfigurationsdatensätze 32 jedoch auch zum Beispiel in eine Daten-Cloud gespiegelt werden, sodass sie für den Fahrer für eine Fahrt mit einem anderen Kraftfahrzeug 24 verfügbar sind.

Erfolgt ein Feststellen einer Identität (S12) oder einer Klassifikation (S13) des mindestens einen Insassen, so kann die Konfiguration noch individueller und situationsabhängiger erfolgen.

Insgesamt zeigen die Ausführungsbeispiele, wie durch die Erfindung eine Insassen-abhängige Personalisierung eines Kraftfahrzeugsystems 26 erfolgen kann.

Gemäß einem weiteren Ausführungsbeispiel kann durch die Personalisierungseinrichtung 10 ein Personalisierungssystem für einen Fahrer des Kraftfahrzeugs 24 bereitgestellt werden, das:
- die vorliegenden Informationen durch Mittel der Fahreridentifikationsmechanismen oder Beobachtung eines Innenraums des Kraftfahrzeugs 24 erfassen kann (S2, S4): Eine Identität und/oder ein Profil des Fahrers; und/oder eine Information, ob sich weitere Insassen in dem Kraftfahrzeug 24 befinden; falls sich weitere Insassen in dem Kraftfahrzeug 24 befinden, eine Klassifikation und/oder Identität der weiteren Insassen;
- eine Insassen-abhängige Personalisierung bereitstellt (S10, S11), die auf den erfassten Informationen basiert, durch a) Auswählen einer Teilmenge von Daten aus einem Haupt-Benutzerprofil des Fahrers, das während der Fahrt genutzt werden soll (zum Beispiel eine Liste der letzten Navigationsziele und/oder eine Liste der letzten Anrufe und/oder eine Favoritenliste); und/oder b) Auswählen eines Elements aus einem Auswahlpunkt, das während der Fahrt genutzt werden soll (zum Beispiel ein Willkommens-Bildschirm und/oder ein Hintergrunddesign und/oder ein sogenanntes "skinning" für die Benutzerschnittstelle); und/oder c) Freischalten oder Blockieren von Anwendungen und/oder Funktionen, die dem Benutzer während der Fahrt zur Verfügung stehen; und/oder d) Freischalten und/oder Blockieren einer Leistung einer Hardware, die dem Benutzer während einer Fahrt zur Verfügung steht;

- die Parameter und/oder Daten des Haupt-Benutzerprofils des Fahrers, basierend auf den erfassten Informationen, erzeugen und/oder aktualisieren kann; und/oder
- basierend auf den erfassten Informationen Erzeugen und/oder Aktualisieren der Parameter und/oder Daten des Haupt-Benutzerprofils der weiteren Insassen.

Eine beispielhafte Umsetzung ist in den Figuren gezeigt, insbesondere in Fig. 1.

Optional kann vorgesehen sein, dass die Parameter und/oder Daten eines Haupt-Benutzerprofils der Insassen entsprechend erzeugt und/oder aktualisiert werden können, falls also der Benutzer ein Insasse des Kraftfahrzeugs ist, vorzugsweise ein weiterer Insasse neben dem Fahrer.

Weiterhin kann optional vorgesehen sein, dass anstelle eines Personalisierungs-Modus verschiedene Personalisierungs-Modi für verschiedene Anwendungen, also beispielsweise verschiedene Anwenderprogramme oder Kraftfahrzeugsysteme 26, vorgesehen sein können. Diese können beispielsweise individuell durch den Fahrer - oder einen anderen Benutzer - ausgewählt werden.

Optional können weitere Personalisierungs-Modi vorgesehen sein, beispielsweise eine Alters-abhängige Konfiguration und/oder zum Beispiel eine Geschäfts-abhängige Konfiguration.

## Patentansprüche

1. Verfahren zum fahrsituationsabhängigen Betreiben mindestens eines Kraftfahrzeugsystems (26) eines Kraftfahrzeugs (24), das Verfahren aufweisend die durch eine Personalisierungseinrichtung (10) des Kraftfahrzeugs (24) durchgeführten Schritte:
- Identifizieren eines Fahrers des Kraftfahrzeugs (24, S2), und
- Feststellen von mindestens einem weiteren Insassen, der sich im Kraftfahrzeug (24, S4) befindet;
wobei das Verfahren durch die folgenden, durch die Personalisierungseinrichtung (10) durchgeführten Schritte gekennzeichnet ist:
- anhand einer Identität des Fahrers: Festlegen von mehreren fahrerspezifischen Konfigurationsdatensätzen (32), wobei jeder der festgelegten Konfigurationsdatensätze (32) Konfigurationsdaten jeweils eines Benutzerprofils des identifizierten Fahrers zum Personalisieren des mindestens einen Kraftfahrzeugsystems (26) beschreibt (S8),
- anhand eines Ergebnisses des Feststellens des mindestens einen Insassen (S4): Festlegen einer Intention des festgestellten Fahrers, mit der er das Kraftfahrzeug (24) benutzt (S10),
- anhand der festgelegten Intention: Auswählen eines Personalisierungsmodus (PDPM_1, PDPM_2) aus einer Mehrzahl an Personalisierungsmodi (PDPM_1, PDPM_2), wobei der ausgewählte Personalisierungsmodus (PDPM_1, PDPM_2) eine Teilmenge der festgelegten fahrerspezifischen Konfigurationsdatensätze (32, S11) vorgibt, und
- Konfigurieren des mindestens einen Kraftfahrzeugsystems (26) anhand eines durch den ausgewählten Personalisierungsmodus (PDPM_1, PDPM_2) vorgegebenen fahrerspezifischen Konfigurationsdatensatzes (32, S9).

2. Verfahren nach Anspruch 1, wobei
jeder der Konfigurationsdatensätze (32) Konfigurationsdaten umfasst zu:
- einer vorbestimmten Favoritenliste; und/oder
- mindestens einem vorbestimmten Navigationsziel; und/oder
- vorbestimmten Kontaktdaten; und/oder
- eine vorbestimmte Bilddatei als Hintergrundbild eines Bildschirms; und/oder
- vorbestimmte Einstellungen zu einem Aktivierungszustand des Kraftfahrzeugsystems (26).

3. Verfahren nach einem der vorhergehenden Ansprüche, aufweisend die Schritte:
- Betreiben der Personalisierungseinrichtung (10) in einem Bedienmodus, und
- durch die Personalisierungseinrichtung (10): Empfangen eines Bediensignals (S17), das eine Bedienhandlung zum Vorgeben des ausgewählten Personalisierungsmodus (PDPM_1, PDPM_2) als zu aktivierenden Bedienmodus beschreibt,
wobei das Festlegen der Fahrerintention (S10) zusätzlich in Abhängigkeit von dem ausgewählten Personalisierungsmodus (PDPM_1, PDPM_2) erfolgt.

4. Verfahren nach einem der vorhergehenden Ansprüche, wobei das Festlegen der Fahrerintention (S10) durch Prädizieren der Fahrerintention in Abhängigkeit von dem Feststellen des mindestens einen weiteren Insassen (S4) erfolgt.

5. Verfahren nach einem der vorhergehenden Ansprüche, aufweisend den durch die Personalisierungseinrichtung (10) durchgeführten Schritt:
- Feststellen einer Identität und/oder einer Klassifikation des mindestens einen weiteren Insassen (S12) zum Feststellen des mindestens einen weiteren Insassen (S4),
wobei das Festlegen der Intention des Fahrers (S10) anhand der festgestellten Identität des mindestens einen weiteren Insassen erfolgt.

6. Verfahren nach einem der vorhergehenden Ansprüche, aufweisend den durch die Personalisierungseinrichtung (10) durchgeführten Schritt:
- Feststellen einer Klassifikation des mindestens einen weiteren Insassen (S13) zum Feststellen des mindestens einen weiteren Insassen (S4),
wobei das Festlegen der Intention des Fahrers (S10) anhand der festgestellten Klassifikation des mindestens einen weiteren Insassen erfolgt.

7. Verfahren nach Anspruch 6,
wobei das Feststellen der Klassifikation des mindestens einen weiteren Insassen (S13) erfolgt in Abhängigkeit von:
- einem festgestellten Alter oder einer festgestellten Altersgruppe des festgestellten mindestens einen weiteren Insassen; und/oder
- einer festgestellten aktuellen Insassenkombination; und/oder
- einer festgestellten Identität des jeweiligen mindestens einen weiteren Insassen; und/oder
- eines festgestellten Sitzplatzes des festgestellten, mindestens einen weiteren Insassen.

8. Verfahren nach einem der vorhergehenden Ansprüche, aufweisend die durch die Personalisierungseinrichtung (10) durchgeführten Schritte:
- Feststellen mindestens eines durch eine Bedienhandlung eines Benutzers des Kraftfahrzeugs (24) gesteuerten Umkonfigurationsvorgangs zum Ändern des Konfigurationsdatensatzes des ausgewählten Personalisierungsmodus (PDPM_1, PDPM_2) (S14),
- in Abhängigkeit von dem festgestellten Umkonfigurationsvorgang Speichern des geänderten Konfigurationsdatensatzes (32, S15), und
- Zuordnen des gespeicherten Konfigurationsdatensatzes (32) zu der festgelegten Intention (S16).

9. Personalisierungseinrichtung (10), die **dadurch gekennzeichnet ist, dass** sie dazu eingerichtet ist, die eine Personalisierungseinrichtung (10) betreffenden Verfahrensschritte eines Verfahrens der vorhergehenden Ansprüche durchzuführen.

10. Personalisierungseinrichtung (10) nach Anspruch 9, umfassend eine Sensoreinrichtung (12), eine Fahreridentifizierungseinrichtung (14), eine Insassenerkennungseinrichtung (16), eine Benutzerprofilverwaltungseinrichtung (18).

11. Kraftfahrzeug (24), das durch eine Personalisierungseinrichtung (10) nach Anspruch 9 oder 10 gekennzeichnet ist.

## Claims

1. Method for operating at least one motor vehicle system (26) of a motor vehicle (24) dependent on the driving situation, the method having the steps carried out by a personalising device (10) of the motor vehicle (24):
- identifying a driver of the motor vehicle (24, S2), and
- determining at least one further occupant which is located in the motor vehicle (24, S2);
wherein the method is **characterised by** the following steps carried out by the personalising device (10):
- on the basis of an identity of the driver: defining a plurality of driver-specific configuration datasets (32), wherein each of the defined configuration datasets (32) describes (S8) configuration data of in each case one user profile of the identified driver for personalising the at least one motor vehicle system (26),
- on the basis of a result of the determining of the at least one occupant (S4): defining an intention of the determined driver, with which they use (S10) the motor vehicle (24),
- on the basis of the defined intention: selecting a personalisation mode (PDPM_1, PDPM_2) from a plurality of personalisation modes (PDPM_1, PDPM_2), wherein the selected personalisation mode (PDPM_1, PDPM_2) pre-determines a partial quantity of the defined driver-specific configuration datasets (32, S11), and
- configuring the at least one motor vehicle system (26) on the basis of a driver-specific configuration dataset (32, S9) pre-determined by the selected personalisation mode (PDPM_1, PDPM_2).

2. Method according to claim 1, wherein
each of the configuration datasets (32) comprises configuration data regarding:
- a predetermined favourites list; and/or
- at least one predetermined navigation destination; and/or
- predetermined contact data; and/or
- a predetermined image data as background image of a screen; and/or
- predetermined settings regarding an activating state of the motor vehicle system (26).

3. Method according to any of the preceding claims, having the steps:
- operating the personalisation device (10) in an operating mode, and
- by means of the personalisation device (10): receiving an operating signal (S17), which describes an operating action for predetermining the selected personalisation mode (PDPM_1, PDPM_2) as an operating mode to be activated,
wherein the defining of the driver intention (S10) takes place depending on the selected personalisation mode (PDPM_1, PDPM_2).

4. Method according to any of the preceding claims, wherein the defining of the driver intention (S10) takes place by predicting the driver intention depending on the determination of the at least one further occupant (S4).

5. Method according to any of the preceding claims, having the step carried out by the personalisation device (10):
- determining an identity and/or a classification of the at least one further occupant (S12) for determining the at least one further occupant (S4),
wherein the definition of the intention of the driver (S10) takes place on the basis of the determined identity of the at least one further occupant.

6. Method according to any of the preceding claims, having the step carried out by the personalisation device (10):
- determining a classification of the at least one further occupant (S13) for determining the at least one further occupant (S4),
wherein the definition of the intention of the driver (S10) takes place on the basis of the determined classification of the at least one further occupant.

7. Method according to claim 6,
wherein the determination of the classification of the at least one further occupant (S13) takes place depending on:
- a determined age or a determined age group of the determined at least one further occupant; and/or
- a determined current occupant combination; and/or
- a determined identity of the respective at least one further occupant; and/or
- a determined seating place of the determined at least one further occupant.

8. Method according to any of the preceding claims, having the steps carried out by the personalisation device (10):
- determining at least one reconfiguration procedure controlled via an operating action of the use of the motor vehicle (24) for changing the configuration dataset of the selected personalisation mode (PDPM_1, PDPM_2) (S14),
- depending on the determined reconfiguration procedure, storing the changed configuration dataset (32, S15), and
- assigning the stored configuration dataset (32) to the defined intention (S16).

9. Personalisation device (10), which is **characterised in that** it is configured to carry out the method steps, concerning a personalisation device (10), of a method of the preceding claims.

10. Personalisation device (10) according to claim 9, comprising a sensor device (12), a driver identifying device (14), an occupant recognition device (16), a user profile administration device (18).

11. Motor vehicle (24) which is **characterised by** a personalisation device (10) according to claim 9 or 10.

## Revendications

1. Procédé de commande dépendant d'une situation de conduite d'au moins un système de véhicule automobile (26) d'un véhicule automobile (24), le procédé présentant les étapes réalisées par un dispositif de personnalisation (10) du véhicule automobile (24) consistant à :
- identifier un conducteur du véhicule automobile (24, S2), et
- déterminer au moins un autre passager, qui se trouve dans le véhicule automobile (24, S4) ;
dans lequel le procédé est **caractérisé par** les étapes suivantes réalisées par le dispositif de personnalisation (10) :
- à l'aide d'une identité du conducteur : déterminer plusieurs ensembles de données de configuration (32) spécifiques au conducteur, dans lequel chacun des ensembles de données de configuration (32) déterminés décrit (S8) des données de configuration respectivement d'un profil utilisateur du conducteur identifié pour personnaliser l'au moins un système de véhicule automobile (26),
- à l'aide d'un résultat de la détermination de l'au moins un passager (S4) : déterminer une intention du conducteur déterminé, avec laquelle il utilise (S10) le véhicule automobile (24),
- à l'aide de l'intention déterminée : choisir un mode de personnalisation (PDPM_1, PDPM_2) parmi une pluralité de modes de personnalisation (PDPM_1, PDPM_2), dans lequel le mode de personnalisation (PDPM_1, PDPM_2) choisi prédéfinit un sous-ensemble des ensembles de données de configuration (32, S11) spécifiques au conducteur déterminés, et
- configurer l'au moins un système de véhicule automobile (26) à l'aide d'un ensemble de données de configuration (32, S9) spécifique au conducteur prédéfini par le mode de personnalisation (PDPM_1, PDPM_2) choisi.

2. Procédé selon la revendication 1, dans lequel
chacun des ensembles de données de configuration (32) comprend des données de configuration :
- d'une liste de favoris prédéterminée ; et/ou
- d'au moins une destination prédéterminée ; et/ou
- de coordonnées prédéterminées ; et/ou
- d'un fichier image prédéterminé en tant que fond d'écran d'un écran ; et/ou
- de paramètres prédéterminés d'un état d'activation du système de véhicule automobile (26).

3. Procédé selon l'une quelconque des revendications précédentes, présentant les étapes consistant à :
- commander le dispositif de personnalisation (10) selon un mode de commande, et
- par le dispositif de personnalisation (10) : recevoir un signal de commande (S17), qui décrit une action de commande pour prédéfinir le mode de personnalisation (PDPM_1, PDPM_2) choisi en tant que mode de commande à activer, dans lequel la détermination de l'intention du conducteur (S10) s'effectue en outre en fonction du mode de personnalisation (PDPM_1, PDPM_2) choisi.

4. Procédé selon l'une quelconque des revendications précédentes, dans lequel
la détermination de l'intention du conducteur (S10) s'effectue par la prédiction de l'intention du conducteur en fonction de la détermination de l'au moins un autre passager (S4).

5. Procédé selon l'une quelconque des revendications précédentes, présentant l'étape réalisée par le dispositif de personnalisation (10) consistant à :
- déterminer une identité et/ou une classification de l'au moins un autre passager (S12) pour déterminer l'au moins un autre passager (S4),
dans lequel la détermination de l'intention du conducteur (S10) s'effectue à l'aide de l'identité déterminée de l'au moins un autre passager.

6. Procédé selon l'une quelconque des revendications précédentes, présentant l'étape réalisée par le dispositif de personnalisation (10) consistant à :
- déterminer une classification de l'au moins un autre passager (S13) pour déterminer l'au moins un autre passager (S4),
dans lequel la détermination de l'intention du conducteur (S10) s'effectue à l'aide de la classification déterminée de l'au moins un autre passager.

7. Procédé selon la revendication 6,
dans lequel la détermination de la classification de l'au moins un autre passager (S13) s'effectue en fonction :
- d'un âge déterminé ou d'une tranche d'âge déterminée de l'au moins un autre passager déterminé ; et/ou
- d'une combinaison actuelle de passagers déterminée ; et/ou
- d'une identité déterminée de l'au moins un autre passager respectif ; et/ou
- d'un siège déterminé de l'au moins un autre passager déterminé.

8. Procédé selon l'une quelconque des revendications précédentes, présentant les étapes réalisées par le dispositif de personnalisation (10) consistant à :
- déterminer au moins une opération de reconfiguration commandée par l'action de commande d'un utilisateur du véhicule automobile (24) pour modifier l'ensemble de données de configuration du mode de personnalisation (PDPM_1, PDPM_2) choisi (S14),
- en fonction de l'opération de reconfiguration déterminée, enregistrer l'ensemble de données de configuration (32, S15) modifié, et
- classer l'ensemble de données de configuration (32) enregistré par rapport à l'intention déterminée (S16).

9. Dispositif de personnalisation (10), qui est **caractérisé en ce qu'**il est créé pour réaliser les étapes de procédé concernant un dispositif de personnalisation (10) d'un procédé selon les revendications précédentes.

10. Dispositif de personnalisation (10) selon la revendication 9, comprenant un dispositif formant capteur (12), un dispositif d'identification de conducteur (14), un dispositif de reconnaissance de passager (16), un dispositif de gestion du profil utilisateur (18).

11. Véhicule automobile (24), qui est **caractérisé par** un dispositif de personnalisation (10) selon la revendication 9 ou 10.
